**Europäisches Patentamt**

**European Patent Office**

**Office européen des brevets**

(19)

(11) Numéro de publication: **0 112 766**

**B1**

(12)

# FASCICULE DE BREVET EUROPÉEN

(45) Date de publication du fascicule du brevet:
**13.08.86**

(51) Int. Cl.⁴: **F 16 D 55/224**

(21) Numéro de dépôt: **83402433.3**

(22) Date de dépôt: **15.12.83**

(54) Frein à disque à étrier à renforts déverrouillables.

(30) Priorité: **27.12.82 ES 519068**

(43) Date de publication de la demande:
**04.07.84 Bulletin 84/27**

(45) Mention de la délivrance du brevet:
**13.08.86 Bulletin 86/33**

(84) Etats contractants désignés:
**DE FR GB IT**

(56) Documents cité:
**EP-A-0 083 881**
**FR-A-2 398 930**
**US-A-3 602 328**

(73) Titulaire: **BENDIX ESPANA S.A., Balmes 243, Barcelona 6 (ES)**

(72) Inventeur: **Ferret, Boffil Joaquim, Calle Mallorca 93, Barcelona 29 (ES)**
Inventeur: **Para , Juan, José, Anselmo Clave 12, Llissa de Munt Barcelona (DE)**

(74) Mandataire: **Le Moenner, Gabriel, SERVICE BREVETS BENDIX 44, Rue François 1er, F-75008 Paris (FR)**

EP 0 112 766 B1

LIBER, STOCKHOLM 1986

## Description

La présente invention concerne les freins à disques, notamment pour véhicule automobile, et, plus particulièrement, un frein à disque comportant un étrier monté à coulissement sur un support fixe dans lequel sont reçus en ancrage et à coulissement deux éléments de friction susceptibles de venir en engagement de friction avec les faces opposées d'un disque lors de la mise en oeuvre d'un moteur de frein porté par l'étrier, cet étrier formant une monture placée autour du support fixe et comportant au moins un organe de renfort axial tubulaire rapporté disposé radialement au-delà de la périphérie du disque et reliant une première et une seconde zones de l'étrier de part et d'autre, axialement, du disque et traversant des ouvertures axiales alignées de ces zones, l'organe de renfort comportant une tête d'extrémité coopérant en appui avec une surface correspondante de la première zone d'étrier et une extrémité filetée opposée sur laquelle est engagé un premier moyen de blocage et de serrage taraudé.

Un frein de ce type est décrit dans le document EP-A-0 083 881 au nom de la demanderesse, publié le 20.07.1983.

Dans l'agencement selon ce document, pour remplacer les éléments de friction ou plaquettes de frein usés par des éléments de friction à garniture neuve, il est nécessaire de démonter le boulon en défaisant l'écrou de blocage et de mise sous tension du boulon vissé sur l'extrémité filetée du boulon, et, après remise en place de l'ensemble, de resserrer le boulon, ce qui ne permet pas de garantir de recouvrer le réglage de tension correct prévu en usine et peut entraîner une modification substantielle des contraintes dans l'étrier. De plus, lors de ces manipulations, les boulons et écrous peuvent être endommagés, voire perdus.

La présente invention a pour objet de remédier à ces inconvénients en proposant un agencement de frein du type défini ci-dessus, de construction simple, de mise en oeuvre aisée et rapide, supprimant la nécessité de prévoir des opérations spéciales de mesure de couple pour rétablir, après échange des éléments de friction, la tension de montage initiale des organes de renfort, et limitant en outre les risques de perte des organes de renfort et de leurs moyens de blocage et de mise sous tension.

Pour ce faire, selon l'invention, le frein comprend un second moyen de blocage et de serrage actionnable individuellement entre une première condition, où il coopère avec le premier moyen de blocage et de serrage, lequel est verrouillé sur l'extrémité filetée dans une position conférant, avec ledit second moyen, une tension déterminée à l'organe de renfort, et une seconde condition dans laquelle l'organe de renfort peut être dégagé de la seconde zone d'étrier.

Selon une caractéristique plus particulière de l'invention, le premier moyen de blocage et de serrage est un écrou vissé et bloqué sur l'extrémité filetée de l'organe de renfort, le second moyen de blocage et de serrage comprenant un moyen de rondelle interposé entre l'écrou et la seconde zone de l'étrier.

Selon une autre caractéristique plus particulière de l'invention, le premier moyen de blocage et de serrage est constitué par une douille taraudée vissée et bloquée sur l'extrémité filetée et reçue dans l'ouverture cylindrique de la seconde zone d'étrier, le second moyen de blocage et de serrage étant constitué d'un écrou coopérant en butée avec un épaulement de la douille coplanaire avec une face de butée de la seconde zone d'étrier.

Les planches de dessins joints illustrent schématiquement, à titre d'exemple non limitatif de la portée de la présente invention, différentes formes de réalisation de l'invention.

- La Fig. 1 est une vue du dessus d'un frein à disque à étrier à renfort démontable selon l'invention;

- La Fig. 2 est une coupe axiale partielle qui représente le montage d'un boulon renfort avec dispositif de serrage en forme de rondelle en U;

- La Fig. 3 est une vue similaire à la précédente où le dispositif de serrage a été enlevé, montrant le dégagement à pivotement du boulon;

- La Fig. 4 est une vue en coupe axiale partielle, à plus grande échelle, de l'écrou d'extrémité des figures précédentes, muni d'un dispositif de serrage en forme de rondelle en U avec lame de ressort de sécurité;

- La Fig. 5 est une coupe transversale suivant la ligne V-V de la Fig. 4;

- La Fig. 6 est une vue équivalente à la Fig. 4 où la rondelle de blocage a la forme d'une pince élastique;

- La Fig. 7 est une coupe transversale selon la ligne VII-VII de la Fig. 6;

- La Fig. 8 est une vue analogue aux Fig. 4 et 6, où le dispositif de serrage est formé par deux rondelles coaxiales qui constituent un dispositif à came aciale;

- La Fig. 9 est une coupe tranversale de la Fig. 8 selon la ligne IX-IX;

- La Fig. 10 est une vue similaire aux précédentes où le dispositif de serrage comprend une bague pouvant être bloquée sur le boulon; et

- La Fig. 11 est une représentation similaire, illustrant une variante de la figure précédente.

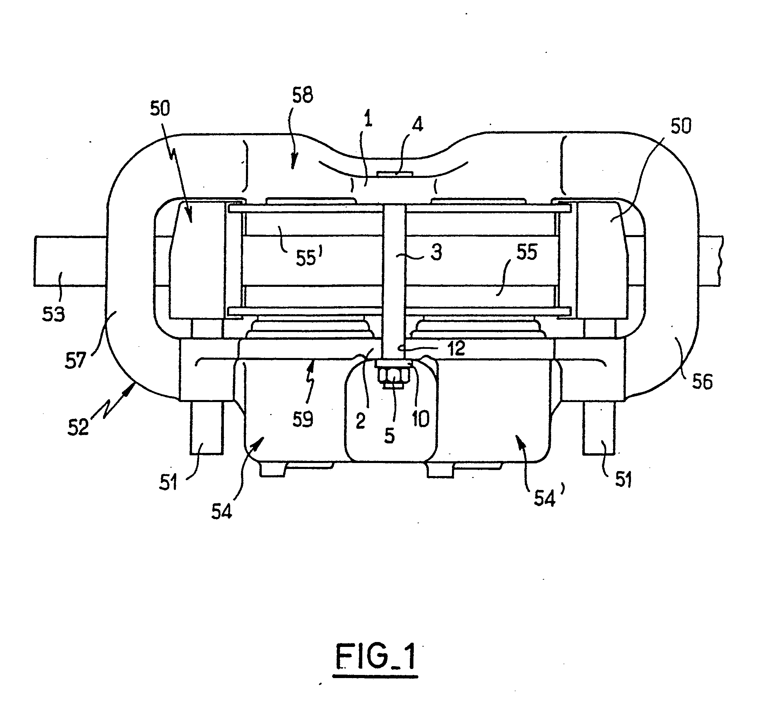

Sur la Fig. 1 on a représenté un frein à disque comportant un aupport fixe 50 destiné à être associé à une partie fixe d'un véhicule (non représentée) et supportant à coulissement, au moyen de deux colonnettes axiales 51 - dans l'exemple représenté -, un étrier mobile 52 chevauchant le disque de frein 53 et comportant au moins un moteur de frein hydraulique 54, 54' sollicitant directement un premier élément de friction ou plaquette de frein 55 d'une paire d'éléments de friction 55, 55' montés en ancrage et à coulissement sur le support fixe 50.

L'étrier 50 forme une monture ou structure en forme de cadre fermé non plan placée autour du support fixe 50 et comportant deux bras latéraux 56 et 57 chevauchant le disque reliés par une partie d'étrier extérieure 58 et une partie d'étrier intérieure 59 comportant le moteur de frein. Chaque partie d'étrier extérieure et intérieure comporte au moins une zone faisant saillie radialement vers l'extérieur 1, 2, respectivement, ces deux zones en vis à vis étant reliées l'une à l'autre par un organe renfort tubulaire 3 s'étendant axialement, radialement au-delà de la périphérie du disque 53 et au-dessus des éléments de friction 55, 55'.

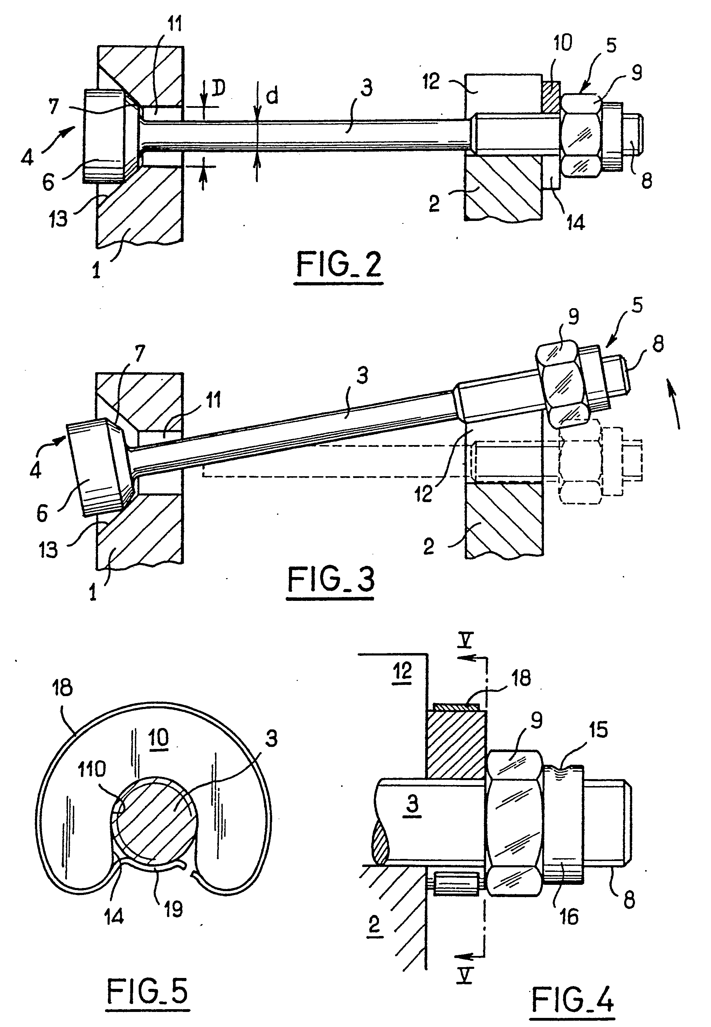

On reconnaît sur les Fig. 2 et 3 les deux zones longitudinales en vis à vis 1 et 2 de l'étrier. Dans ce mode de réalisation, l'organe de renfort est constitué par un boulon en forme de colonnette 3 muni, à ses extrémités, d'une tête et d'un moyen de blocage, désignés respectivement par les repères géenraux 4 et 5.

La tête d'extrémité 4 du boulon 3 est constituée par une tête cylindrique 6 dont la face tournée vers l'extrémité opposée est munie d'un chanfrein conique 7, à 45° par exemple. Les moyens de blocage et de serrage d'extrémité du boulon sont matérialisés ici par un ensemble composé d'un filetage terminal 8, usiné sur l'extrémité correspondante du boulon, d'un écrou 9 vissé de manière adéquate sur ce filetage, et d'un dispositif de serrage 10, décrit plus loin, interposé entre les faces en regard de l'écrou 9 et de la zone d'étrier 2.

Comme on peut le voir sur les figures, le boulon 3 traverse les deux zones 1 et 2 de l'étrier de frein par des ouvertures en vis à vis 11 et 12. La première de celles-ci, en regard de la tête d'extrémité 4, est constituée par un trou cylindrique d'un diamètre $D$ nettement supérieur au diamètre $d$ du boulon 3 et dont l'ouverture orientée vers l'extérieur par rapport au frein, c'est-à-dire dans une direction opposée à celle de la zone d'étrier 2, est chanfreinée de façon à former un siège conique 13, complémentaire du chanfrein conique 7 de la tête d'extrémité 4. L'ouverture 12 est munie par contre d'une fente qui débouche radialement vers l'extérieur sur le bord supérieur de la zone 2 de l'étrier.

Dans le cas particulier des Fig. 2 et 3, l'élément de serrage 10 est constitué par une rondelle enfilée sur le filetage 8 de la colonne 3 et dont l'orifice central 110 est prolongé radialement par une découpe latérale 14 qui permet le dégagement latéral du filetage vers l'extérieur.

Lors du montage du frein pourvu du dispositif décrit, après avoir mis en place les porte-plaquettes supportées par des organes classiques, non représentés, les boulons formant colonnettes 3 sont mis en place dans la position représentée et l'écrou 9 est vissé sur le filetage 8. Avant qu'il ne vienne en contact avec la zone 2 de l'étrier, on introduit la rondelle ouverte 10 entre l'écrou et la face correspondante de la zone d'étrier 2.

On serre ensuite l'écrou 9 avec une clé dynamométrique ou tout autre outil équivalent, puis on bloque finalement l'écrou sur le filetage 8, par exemple au moyen d'une goutte de résine durcissable, non représentée, ou d'un coup de pointeau 15 exécuté sur le collet 16 de l'écrou (Fig. 4), de manière à produire une déformation correspondante sur l'interface écrou/filetage.

A partir de ce moment, la pré-tension appliquée pendant le montage sur le boulon formant colonnette est déterminée avec précision et il n'est pas possible de la modifier sans détruire l'ensemble boulon/ écrou.

Pour l'échange des plaquettes de frein, on extrait la rondelle 10 à l'aide d'un outil à percussion approprié que l'on actionne par le dessous de la Fig. 2, grâce à quoi on arrive à la configuration desserrée indiquée par les lignes en tirets de la Fig. 3. L'espacement ainsi créé entre l'écrou 9 et le bras d'étrier 2 permet de faire osciller la colonnette 3 vers le haut, comme indiqué par la flèche, jusqu'à ce que l'ensemble d'écrou d'extrémité 5 sorte par le haut de la zone d'étrier 2; à ce moment, le montage à écrou d'extrémité 5 peut être déplacé vers la gauche jusqu'à ce qu'il vienne en contact avec la zone d'étrier 1, de façon que l'ouverture supérieure de l'étrier soit dégagée pour permettre le passage vers le haut des porte-plaquettes usagées et la mise en place de porte-plaquettes neuves.

Le montage des plaquettes neuves est en effet. effectué en répétant en sens inverse les opérations décrites précédemment. La dernière phase est le montage à force de la rondelle 10, typiquement par percussion, en prévoyant, si nécessaire, des chanfreins d'entrée sur les bords adjacents de l'écrou 9 et/ou de la rondelle 10. On se rend ainsi compte qu'au remontage de la rondelle 10 dans sa position d'installation, on rétablit sur le dispositif la précontrainte de serrage établie en usine lors du montage du frein. Ceci justifie la dénomination de dispositif ou élément de serrage utilisée dans la description et les revendications étant donné que l'on rétablit la tension de serrage requise après chaque nouveau montage.

Cet organe de serrage ou rondelle 10 peut avoir la configuration en demi-lune représentée en vue de face sur la Fig. 5. Pour empêcher la perte accidentelle de ce dispositif en raison des vibrations de fonctionnement, on peut prévoir différents dispositifs.

Dans le cas des Fig. 4 et 5, la rondelle 10 est entourée sur sa périphérie d'une lame de ressort 18 dont les extrémités sont ajustées autour des extrémités de la rondelle ouverte, comme on peut le voir sur les figures. En outre, l'une des extrémités du ressort, ou les deux à la fois, sont cintrées vers l'intérieur de manière à servir de butée d'appui 19 contre le filetage 8. Ce ressort de sécurité peut être introduit ou extrait en le déplaçant axialement par rapport au boulon 3.

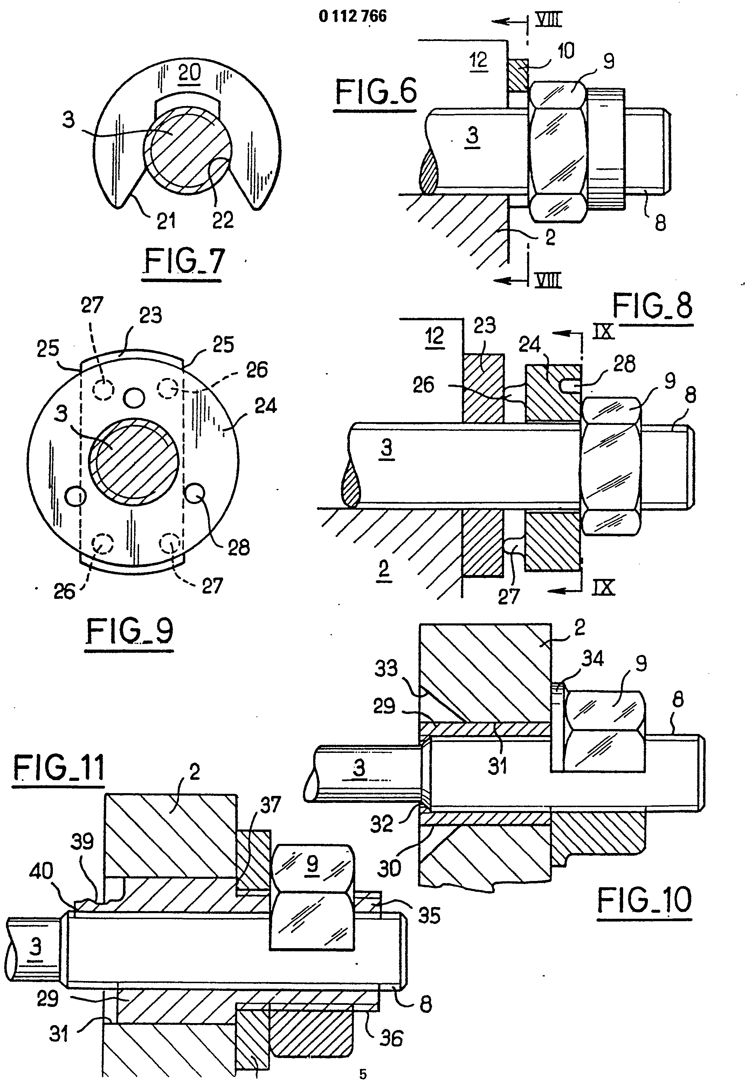

Dans la variante de ce dispositif représentée sur les Fig. 6 et 7, la rondelle 20, analogue à la rondelle 10 ci-dessus, est confectionnée dans un acier à ressort et son ouverture latérale d'introduction 21 comporte des flancs opposés 22, complémentaires aux surfaces diamétralement opposées de la partie filetée 8 du boulon 3, ce qui fait que la rondelle est accouplée au boulon par encliquetage lorsqu'on applique une pression radiale suffisante.

Dans la variante illustrée sur les Fig. 8 et 9, le dispositif de serrage 10 est constitué par deux rondelles, 23 et 24, à montage coaxial libre sur le filetage 8, entre l'écrou 9 et la zone d'étrier 2 de même que précédemment la rondelle 10. La première rondelle 23 comporte deux plats latéralement opposés 25 et la seconde rondelle 24 comporte, sur sa face tournée vers la première rondelle, deux paires d'ergots 26 et 27. Comme on le constate sur les figures, la disposition est telle que les ergots peuvent venir en appui sur les extrémités diamétralement opposées de la rondelle à facettes 23, de manière que l'ensemble des deux rondelles 23, 24 occupe une longueur axiale déterminée correspondant à la valeur nécessaire pour appliquer la pression de serrage, ou bien se dégagent de cette rondelle dans les facettes 25, par rotation relative autour de l'axe des rondelles, afin de créer le jeu nécessaire pour le démontage. Bien entendu, tout autre dispositif à came axiale produisant l'effet désiré peut être utilisé conformément à l'invention. L'actionnement de la rondelle 24 peut être assuré par exemple au moyen d'une clé à ergots appropriée que l'on introduit dans des trous 28 formés dans la face de la rondelle 24 opposée aux ergots 26, 27. Bien que l'écrou 9 représenté ici soit dépourvu de collet, il est évident qu'il peut également être bloqué sur le boulon 3 par l'une quelconque des manières décrites plus haut.

La Fig. 10 illustre un autre mode de réalisation d'un dispositif de serrage, constitué ici d'un manchon 29 comportant un filetage intérieur, accouplé de la manière représentée au filetage 8 du boulon 3, et une surface extérieure cylindrique 30 qui s'ajuste dans un trou cylindrique fermé 31 de la zone d'étrier 2, qui, dans ce cas, remplace la fente ouverte 12 des précédentes réalisations. Dans ce cas, le montage est réalisé en serrant à fond l'écrou 9, jusqu'à obtenir la tension de réglage préalable requise, en entraînant le manchon 29 le long du filetage. Quand la tension requise est atteinte, le manchon 29 est bloqué dans la position ainsi atteinte, par exemple au moyen d'une goutte de résine durcissable 32 ou par un coup de pointeau similaire à celui décrit précédemment. Comme cette opération doit être réalisée sur la face interne du bras 2 de l'étrier, celui-ci comporte avantageusement un évasement 33 pour éviter que le manchon ne doive dépasser dans l'espace occupé par les porte-plaquettes. Le démontage est réalisé en dévissant l'écrou 9 et en déplaçant axialement le boulon 3 jusqu'à ce que le manchon 29 vienne en butée contre la zone opposée 1 de l'étrier. Lors du remontage, le boulon est remis en place et l'écrou 9 est serré à nouveau à fond contre le manchon 29, de manière à rétablir la tension préalable correcte, établie en usine. Dans ce cas, l'écrou 9 peut être d'une construction quelconque courante, avec de préférence un collet 34 formant une surface de portée adéquate, bien centrée, avec l'extrémité du manchon 29 et la face extérieure du bras d'étrier 2.

Dans la variante de la Fig. 11, le manchon 29 diffère de celui décrit ci-dessus en ce qu'il fait saillie extérieurement, par rapport à l'étrier 2, par un tourillon 35, fileté à son extrémité 36 pour recevoir l'écrou 9 et qui définit un gradin intermédiaire 37 correspondant fonctionnellement à la butée de l'extrémité droite du manchon de la Fig. 10. Le fonctionnement est le même que celui décrit précédemment. A la place du collet 34 de l'écrou, on peut utiliser une rondelle rectifiée 38, et au lieu d'un blocage par une goutte de résine 32, on peut appliquer un coup de pointeau 39 sur une petite protubérance 40 faisant saillie axialement par rapport à l'extrémité intérieure du manchon, comme on peut le voir sur la vue en demi-coupe de la partie supérieure de la Fig. 11.

Quoique l'invention ait été décrite en relation avec un organe de renfort axial unique, elle doit être comprise comme s'appliquant également à un frein dont l'étrier est pourvu de deux ou plus renforts axiaux comme décrit dans le document EP-A-0 083 881 sus-mentionné.

**Revendications**

1. Frein à disque comportant un étrier (52) monté à coulissement sur un support fixe (50) dans lequel sont reçus en ancrage et à coulissement deux éléments de friction (55, 55') susceptibles de venir en engagement de friction avec les faces opposées d'un disque (53) lors de la mise en oeuvre d'un moteur de frein (54, 54') porté par l'étrier (52), cet étrier formant une monture placée autour du support fixe (50) et comportant au moins un organe de renfort axial tubulaire rapporté (3) disposé radialement au-delà de la périphérie du disque (53) et reliant une première (1) et une seconde (2) zones de l'étrier de part et d'autre, axialement, du disque et traversant des ouvertures axiales alignées (11; 12, 31) de ces zones, l'organe de renfort comportant une tête d'extrémité (4) coopérant en appui avec une surface correspondante (13) de la première zone d'étrier (1) et une extrémité filetée opposée (8) sur laquelle est engagé un premier moyen de blocage et de serrage taraudé (9; 29), caractérisé en ce qu'il comprend un second moyen de blocage et de serrage (10 ; 23, 24; 9) actionnable individuellement entre une première condition, où il coopère avec le premier moyen de blocage et de serrage, lequel est verrouillé sur l'extrémité filetée dans une position conférant, avec ledit second moyen, une tension déterminée à l'organe de renfort, et une seconde condition dans laquelle l'organe de renfort peut être dégagé de la seconde zone d'étrier (2).

2. Frein à disque selon la revendication 1, caractérisé en ce que l'ouverture (11) de la première zone d'étrier (1) a des dimensions transversales ($\underline{D}$) supérieures à celles ($\underline{d}$) de l'organe de renfort (3) entre la tête d'extrémité (4) et l'extrémité filetée (8).

3. Frein à disque selon la revedication 1 ou la revendication 2, caractérisé en ce que la tête d'extrémité (4) de l'organe de renfort (3) comporte une surface d'appui sensiblement tronconique (7) coopérant avec un évasement du profil complémentaire (13) de l'ouverture (11) de première zone d'étrier (1).

4. Frein à disque selon l'une des revendications 1 à 3, caractérisé en ce que le premier moyen de blocage et de serrage est un écrou (9) vissé et bloqué sur l'extrémité filetée (8) de l'organe de renfort (3), le second moyen de blocage et de serrage (10; 23-24) comprenant un moyen de rondelle interposé entre l'écrou et la seconde zone de l'étrier (2).

5. Frein à disque selon la revendicaticn 4, caractérisé en ce que le moyen de rondelle comprend une rondelle amovible (10) pourvue d'une ouverture radiale (14, 21) permettant le passage de l'extrémité filetée (8) de l'organe de renfort (3).

6. Frein à disque selon la revendication 4, caractérisé en ce que le moyen de rondelle comprend deux rondelles (23, 24) enfilées coaxialement sur l'extrémité filetée (8) et dont les faces adjacentes sont pourvues de moyens de came coopérants (26, 27) permettant de modifier sélectivement l'épaisseur axiale hors tout du moyen de rondelle.

7. Frein à disque selon l'une des revendications 4 à 6, caractérisé en ce que l'ouverture (12) de la seconde zone d'étrier (2) est une fente débouchant à l'extérieur de cette seconde zone d'étrier et permettant le dégagement à pivotement de l'organe de renfort (3).

8. Frein à disque selon l'une des revendications 1 à 3, caractérisé en ce que le premier moyen de blocage et de serrage est constitué par une douille taraudée (29) vissée et bloquée sur l'extrémité filetée (8) et reçue dans l'ouverture cylindrique (31) de la seconde zone d'étrier (2), le second moyen de blocage et de serrage étant constitué d'un écrou (9) coopérant en butée avec un épaulement de la douille (29) coplanaire avec une face de butée de la seconde zone d'étrier (2).

9. Frein à disque selon la revendication 8, caractérisé en ce que l'écrou (9) est vissé sur la partie de l'extrémité filetée (8) faisant saillie hors de la douille taraudée (29), l'épaulement de butée de cette dernière étant constitué par son extrémité frontale.

10. Frein à disque selon la revendication 8, caractérisé en ce que l'écrou (9) est vissé sur une partie de prolongement de diamètre réduit filetée extérieurement (35) de la douille taraudée (29).

**Patentansprüche**

1. Scheibenbremse mit einem Bremssattel (52), der gleitbar auf einem Bremsträger (50) gelagert ist, in dem zwei Bremsbacken (55, 55') gleitend gehaltert sind, die bei Betätigung eines vom Bremssattel (52) getragenen Bremsmotors (54, 54') in Reibanlage mit den entgegengesetzten Seiten einer Bremsscheibe (53) bewegbar sind, wobei dieser Bremssattel einen Rahmen bildet, der den Bremsträger (50) umgebend angeordnet ist und mindestens ein eingesetztes rohrförmiges axiales Verstärkungsteil (3) umfaßt, das radial außerhalb des Umfangs der Bremsscheibe (53) angeordnet ist und einen ersten (1) und einen zweiten (2) Bremssattelbereich axial beidseitig zur Bremsscheibe verbindet und durch axial ausgerichtete Öffnungen (11; 12, 31) dieser Bereiche verläuft, wobei das Verstärkungsteil ein Kopfende (4) und ein entgegengesetztes Gewindeende (8) aufweist, von denen das Kopfende an einer entsprechenden Fläche (13) des ersten Bremssattelbereiches (1) angreift und mit dem Gewindeende ein erstes mit Gewinde versehenes Fixier- und Spannmittel (9; 29) in Eingriff steht, dadurch gekennzeichnet, daß sie ein zweites Fixier- und Spannmittel (10; 23, 24; 9) aufweist, das individuell zwischen einem ersten Zustand, in dem es mit dem ersten Fixier- und Spannmittel zusammenwirkt, und einem zweiten Zustand, in dem das Verstärkungsteil von dem zweiten Bremssattelbereich (2) gelöst werden kann, betätigbar ist, wobei das erste Fixier- und Spannmittel am Gewindeende in einer Lage verriegelbar ist, die zusammen mit dem zweiten Fixierund Spannmittel dem Verstärkungsteil eine vorgegebene Spannung verleiht.

2. Scheibenbremse nach Anspruch 1, dadurch gekennzeichnet, daß die Öffnung (11) des ersten Bremssattelbereichs (1) Abmessungen (D) in Querrichtung hat, die größer sind als diejenigen (d) des Verstärkungsteils (3) zwischen dem Kopfende (4) und dem Gewindeende (8).

3. Scheibenbremse nach Anspruch 1 oder 2, dadurch gekennzeichnet, daß das Kopfende (4) des Verstärkungsteils (3) eine im wesentlichen kegelstumpfförmige Anlagefläche (7) aufweist, die mit einer komplementär profilierten Ausnehmung (13) der Öffnung (11) des ersten Bremssattelbereiches (1) zusammenwirkt.

4. Scheibenbremse nach einem der Anspruche 1-3, dadurch gekennzeichnet, daß das erste Fixier- und Spannmittel eine Mutter (9) ist, die auf das Gewindeende (8) des Verstärkungsteils (3) aufgeschraubt und dort festgelegt ist, während das zweite Fixier- und Spannmittel (10; 23, 24) ein scheibenartiges Mittel aufweist, das zwischen der Mutter und dem zweiten Bremssattelbereich (2) eingesetzt ist.

5. Scheibenbremse nach Anspruch 4, dadurch gekennzeichnet, daß das scheibenartige Mittel aus einer entfernbaren Beilagscheibe (10) besteht, die mit einer radialen Öffnung (14, 21) für den Durchtritt des Gewindeendes (8) des Verstärkungsteils (3) versehen ist.

6. Scheibenbremse nach Anspruch 4, dadurch gekennzeichnet, daß das scheibenartige Mittel aus zwei Beilagscheiben (23, 24) besteht, die koaxial auf das Gewindeende (8) aufgeschoben sind und deren angrenzende Seiten mit zusammenwirkenden Nockenmitteln (26, 27) versehen sind, die eine wahlweise Änderung der axialen Dicke des scheibenartigen Mittels erlauben.

7. Scheibenbremse nach einem der Anspruche 4-6, dadurch gekennzeichnet, daß die Öffnung (12) des zweiten Bremssattelbereiches (2) ein Schlitz ist, der an der Außenseite dieses zweiten Bremssattelbereiches mündet und ein Lösen des Verstärkungsteils (3) durch Schwenken erlaübt.

8. Scheibenbremse nach einem der Anspruche 1-3, dadurch gekennzeichnet, daß das erste Fixier- und Spannmittel von einer mit Innengewinde versehenen Hulse (29) gebildet wird, die auf das Gewindeende (8) aufgeschraubt und dort festgelegt ist und in der zylindrischen Öffnung (31) des zweiten Bremssattelbereiches (2) sitzt, während das zweite Fixier- und Spannmittel von einer Mutter (9) gebildet wird, die an einer Schulter der Hulse (29) anliegt, die koplanar zu einer Anschlagfläche des zweiten Bremssattelbereiches (2) ist.

9. Scheibenbremse nach Anspruch 8, dadurch gekennzeichnet, daß die Mutter auf den aus der Hulse (29) vorstehenden Abschnitt des Gewindeendes (8) aufgeschraubt ist, wobei die Anschlagschulter der Hülse von seinem vorderen Ende gebildet wird.

10. Scheibenbremse nach Anspruch 8, dadurch gekennzeichnet, daß die Mutter (9) auf einen mit Außengewinde versehenen Verlängerungsabschnitt (35) verringerten Durchmessers der Hülse (29) aufgeschraubt ist.

## Claims

1. A disc brake comprising a caliper (52) slidingly mounted on a fixed support (50) a pair of friction members (55, 55') being anchored and slidingly received therein and being adapted to frictionally engage the opposite faces of a disc (53) upon actuation of a brake motor (54, 54') supported by the caliper (52), said caliper forming a frame placed around the fixed support (50) and comprising at least one tubular axial reinforcing member (3) disposed radially outside of the periphery of the disc (53) and connecting first (1) and second (2) caliper zones on opposite axial sides of the disc and traversing aligned axial openings (11; 12, 31) of said zones, the reinforcing member comprising an end head (4) cooperating in abutment with a corresponding surface (13) of the first caliper zone (1), and an opposite threaded end (8) which is engaged by a first tapped blocking and clamping means (9; 29), characterized in that it comprises a second blocking and clamping means (10; 23, 24; 9) adapted to be individually actuated between a first condition at which it cooperates with the first blocking and clamping means, which is locked on the threaded end in a position to exert with said second means a predetermined tension on the reinforcing member, and a second condition at which the reinforcing member may be disengaged from the second caliper zone (2).

2. Disc brake according to claim 1, characterized in that the opening (11) of the first caliper zone (1) has transverse dimensions (D) which are greater than that (d) of the reinforcing member (3) between the end head (4) and the threaded end (8).

3. Disc brake according to claim 1 or claim 2, characterized in that the end head (4) of the reinforcing member (3) includes a substantially conical abutment surface (7) cooperating with a matingly shaped recess (13) of the opening (11) of the first caliper zone (1).

4. Disc brake according to any of claims 1 to 3, characterized in that the first blocking and clamping means is a nut (9) threadingly engaged with and locked on the threaded end (8) of the reinforcing member (3), the second blocking and clamping means (10; 23, 24) comprising washer means interposed between the nut and the second caliper zone (2).

5. Disc brake according to claim 4, characterized in that the washer means comprises a removable washer (10) provided with a radial opening (14, 21) to allow for the passage of the threaded end (8) of the reinforcing member (3).

6. Disc brake according to claim 4, characterized in that the washer means comprises two washers (23, 24) coaxially disposed on the threaded end (8) and having their adjacent faces provided with cooperating cam means (26, 27) permitting to selectively modify the axial thickness outside of the washer means.

7. Disc brake according to any of claims 4 to 6, characterized in that the opening (12) of the second caliper zone (2) is a slot merging at the exterior of said second caliper zone and permitting pivotal disengagement of the reinforcing member (3).

8. Disc brake according to any of claims 1 to 3, characterized in that the first blocking and clamping means is comprised of a tapped sleeve (29) threadingly engaged and locked on the threaded end (8) and received in the cylindrical opening (31) of the second caliper zone (2), the second locking and clamping means being comprised of a nut (9) abuttingly cooperating with a shoulder of the sleeve (29) coplanar with an abutment face of the second caliper zone (2).

9. Disc brake according to claim 8, characterized in that the nut (9) is threadingly engaged on the portion of the threaded end (8) which projects beyond the tapped sleeve (29), the abutment shoulder of the latter being comprised of its front end.

10. Disc brake according to claim 8, characterized in that the nut (9) is threadingly engaged on a threaded extended portion (35) of reduced diameter of the threaded sleeve (29).

**FIG_1**

**FIG_2**

**FIG_3**

**FIG_5**

**FIG_4**

0 112 766

FIG_7

FIG_6

FIG_9

FIG_8

FIG_11

FIG_10